Europäisches Patentamt

European Patent Office

Office européen des brevets

(19)

(11) Publication number: **0 460 852 A2**

# EUROPEAN PATENT APPLICATION

(12)

(21) Application number: **91304798.1**

(22) Date of filing: **28.05.91**

(51) Int. Cl.$^5$: **G06F 12/08**

(30) Priority: **04.06.90 US 533190**

(43) Date of publication of application:
**11.12.91 Bulletin 91/50**

(84) Designated Contracting States:
**DE FR GB**

(71) Applicant: **NCR CORPORATION**
**World Headquarters**
**Dayton, Ohio 45479 (US)**

(72) Inventor: **Kass, William J.**
**104 Chestnut Drive**
**Easley, South Carolina 29640 (US)**
Inventor: **Hilley, Michael R.**
**184 Pearson Road**
**Belton, South Carolina 29627 (US)**
Inventor: **Hoevel, Lee W.**
**225 Riggs Drive**
**Clemson, South Carolina 29631 (US)**

(74) Representative: **Robinson, Robert George**
**International Patent Department NCR Limited**
**915 High Road North Finchley**
**London N12 8QJ (GB)**

(54) **System for maintaining data coherency between main and cache memories.**

(57) A system of maintaining coherency for a data block transferred from a main memory (22) to a cache memory (20) is provided. The data transfer is recorded in a tag register (32) in the main memory. An overwrite of the data block is detected by comparing main memory data writes with the recorded transfer. The cache memory (20) is only notified in the event an overwrite is detected. An invalid flag is then set in the cache memory.

EP 0 460 852 A2

PROCESSOR 12

CACHE

FIG. 1A

20

14

16 42

AS /
REQ
RESP
CLK
RST /

OEN /

30
BUFFER

28

STATE
MACHINE

BUS B

MWRDY

INV

26

MEMORY
CONTROLLER

40

38

TD0

TD1

18

FIG. 1B

10

A BUS A
D BUS A
C BUS A

24

22

BUFFER / ECC

SYSTEM
MEMORY

34

36

TDIN

TAG
REGISTER

32

A BUS B
D BUS B
C BUS B

The present invention relates to computer memory systems. More particularly, it relates to a system of maintaining coherency for data transferred from a main memory to a processor cache memory.

The performance of a computer system can be enhanced by the use of a memory hierarchy. For example, a three tiered memory can be constructed from low, medium, and high speed memories. A low speed memory may be a magnetic disc for low cost, bulk storage of data. A medium speed memory may be constructed from DRAMs for use as the computer system's main memory. A high speed memory may employ SRAMs for use as a processor cache memory. The theory behind memory hierarchy is to group instructions and data to be executed by the system processor in the highest speed memory. Such high speed memory is typically the most expensive memory available, so economics dictate that it be relatively small. Main memory consisting of DRAMs is denser and less expensive than a cache memory with SRAMs, and can therefore be significantly larger than the cache memory.

During operation, the system processor transfers instructions and data from system memory to the cache memory in order to have quick access to the variables of the currently executing program. As additional data, not in the cache, is required, such data is transferred from the main memory by replacing selected data in the cache. Various techniques or algorithms are utilized to determine which data is replaced. Since the data in the cache is duplicative of data in the main memory, changes to data in one memory must similarly be changed or noted in the other memory. The problem of maintaining consistency between the cache and main memory data is referred to as coherency. For example, if the data in the cache is modified, the corresponding data in the main memory must similarly be modified. A scheme for modifying data in the main memory at the same time as data in the cache is known as a write-through cache. Alternatively, if only the cache memory data is modified, then such modified cache data must overwrite the main memory data when it is replaced.

In many computer systems, typically large systems, the main memory may be accessed by devices other than the system processor. For example, data may be written to the main memory by another device while the processor is operating on data in its cache. If the data written to main memory overwrites data presently in the cache, a coherency problem is presented. In the past, a method such as bus snooping has been used. This involves monitoring a bus for writes to main memory and then checking a tag directory associated with the cache to see if the data is in the cache. If present, a flag is set in the cache tag directory to invalidate the entry so that the old data is not used by the processor. Since the processor is responsible for checking the cache tag directory, processing time is consumed. This problem is further exaggerated because multiple devices tend to primarily use their own areas of memory, so most writes to main memory from other devices will not affect the data presently in the processor cache. System performance deteriorates when the processor must take time to check the cache tag directory for data which is not presently residing therein.

It is an object of the present invention to provide a new and improved system of maintaining coherency for data transferred from one memory to another.

According to the present invention there is provided a system of maintaining coherency for a data block transferred from a first memory to a second memory, characterized in that said first memory is provide with register means in which is made a record of the transfer of a data block from said first memory to said second memory, detecting means connected to said register means for detecting an overwrite of said data block in said first memory, and for notifying said second memory that said data block stored therein has been overwritten in said first memory.

An embodiment of the present invention will now be described with reference to the accompanying drawings in which:-

Figures 1A and 1B are a block diagram of a memory control system for maintaining data coherency according to one form of the present invention;

Figures 2A and 2B are a circuit diagram of a state machine shown in Figures 1A and 1B; and

Figure 3 is a flow diagram depicting an invalidation cycle according to one form of the present invention.

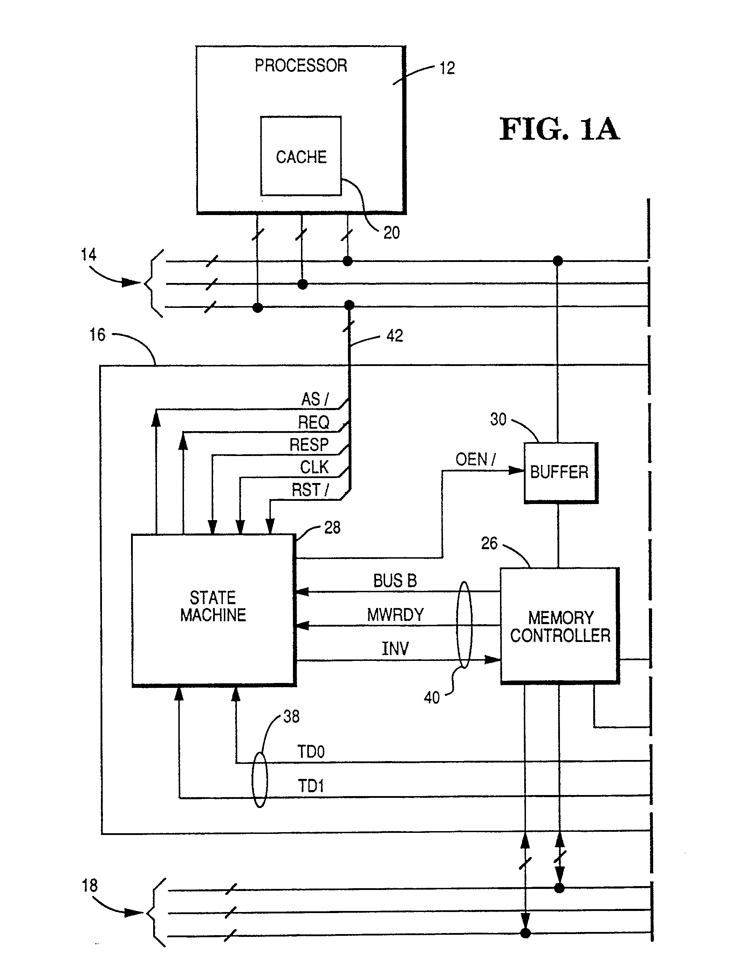

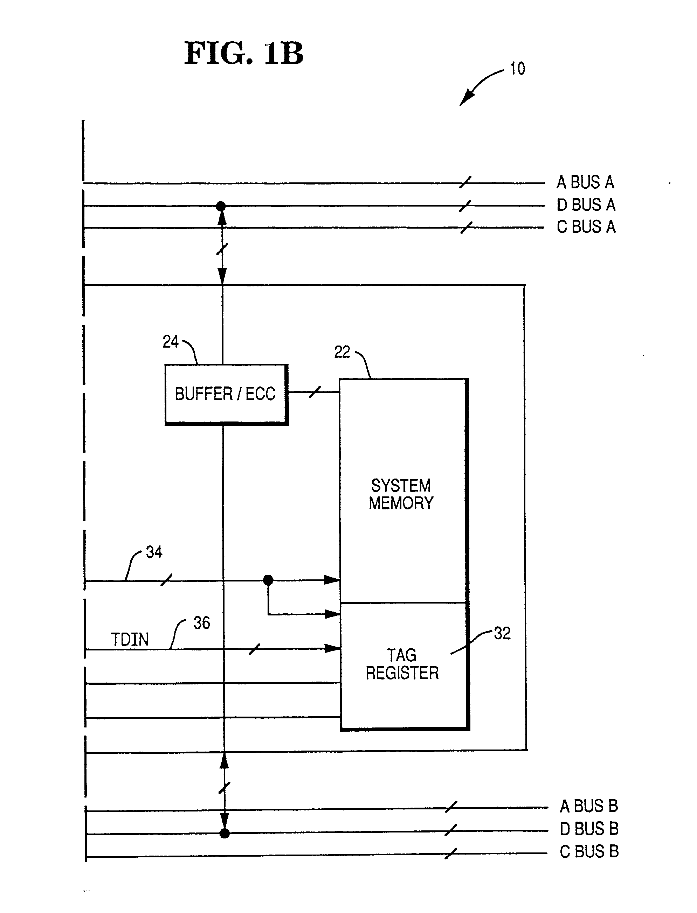

Figures 1A and 1B show a portion of a computer system 10 having a processor 12 connected to a bus 14, and a memory card 16 connected between bus 14 and a bus 18. Processor 12 includes a memory cache 20 for high speed, processor memory accesses. Memory card 16 has a system memory 22 which in a preferred embodiment consists of a number of DRAM chips. Memory card 16 also includes data buffers and error checking circuitry 24, a memory controller 26, state machine 28 and address buffers 30. Bus 14 consists of address, data and control busses ABUSA, DBUSA and CBUSA, respectively. Bus 18 consists of address, data and control busses ABUSB, DBUSB and CBUSB, respectively. System memory 22 is connected to, and may be accessed from busses 14 and 18, whereas memory cache 20 is connected solely to bus 14. During start up of computer system 10, data is transferred into memory 22 from nonvolatile storage such as a magnetic disc, preferably connected to bus 18. Processor 12 selects data from memory 22 to be written into its cache 20 for execution. Since cache 20 can only hold a fraction of the data in memory 22, processor 12 is constantly replacing data in cache 20 with new data from memory 22.

Data that is written from memory 22 into cache 20 resides in both locations until the cache data is replaced with new data from memory 22. During the time when data resides in both cache 20 and memory 22, modifications to such data in either location raises the coherency issues discussed previously. If processor 12 modifies data in cache 20, the change must also be made to the data in memory 22. In a preferred embodiment of the present invention, cache 20 is a write-through cache which means that any write from processor 12 to cache 20 is performed simultaneously with a write to the same memory location in memory 22.

Data in memory 22 may also be modified by other devices connected to either bus 14 or 18. For example, data in memory 22 may be overwritten by a device connected to bus 18. The present invention addresses the coherency issue raised when data that is overwritten in memory 22 also resides in cache 20.

System memory 22 includes a tag register 32. Each addressable location in tag register 32 corresponds to a block of data in memory 22. For example, if a data block consists of sixteen bytes of data, a single location in tag register 32 is assigned to each sixteen bytes. As will be discussed more fully, each such tag register location preferably stores two bits for each corresponding data block. Tag register 32 is connected to memory controller 26 by signal lines 34 and 36. Signal line 34 provides address signals (for example, from data transfers to memory 22) to tag register 32 in the form of memory address, write enable, row address strobe (RAS) and column address strobe (CAS) signals. Signal line 36 provides tag data into register 32 (TDIN). Tag register 32 is also connected to state machine 28 by signal line 38 which provides tag data bits TD0 and TD1 to state machine 28.

State machine 28 is logically connected between tag register 32 and cache memory 20. State machine 28 is connected to memory controller 26 by signal lines 40. Signal lines 40 provide state machine 28 with signals BUSB and MWRDY which indicate when data in system memory 22 is being overwritten by an entity connected to bus 18. More particularly, the BUSB signal is active when data is being received from bus 18, and the MWRDY signal is active when a system memory write has been completed. In the embodiment described, processor 12 is the only entity on bus 14 which transfers data to memory 22. Thus, an overwrite received from bus 14 should not activate state machine 28. The MWRDY signal is provided to assure that an invalidation cycle is not started by state machine 28 until after memory 22 has actually been overwritten. Signal lines 40 also provide an invalidation signal INV to memory controller 26 requesting that the tag register 32 be cleared or reset, as will be discussed more fully.

Memory controller 26 arbitrates between read/write requests from busses 14 and 18 for access to system memory 22, and converts the bus address to a memory address, write enable, RAS and CAS signals for memory 22. The invalidation signal INV received from state machine 28 is treated as another request for access to memory. However, because of the importance of data coherency, it is preferred to give it the highest priority. When received by memory controller 26, tag register 32 is accessed and the tag bits reset to zero.

State machine 28 is connected to processor 12 and cache 20 by control line 42. Processor 12 provides clock CLK and reset RST/ signals to state machine 28 over line 42. State machine 28 provides an interrupt request signal REQ to processor 12 and receives an acknowledge signal RESP in response thereto. State machine 28 also provides an output enable signal to buffers 30 when the address of the overwritten data is to be placed on bus 14, and provides a signal AS/ to processor 12 indicating that the address of the data byte to be invalidated is on bus 14.

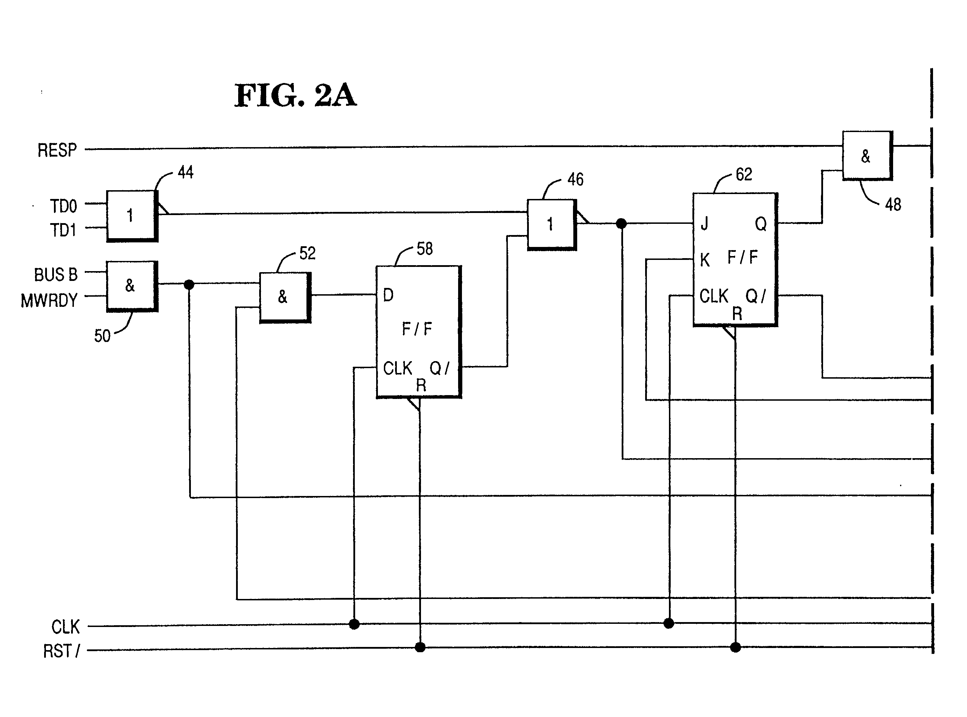

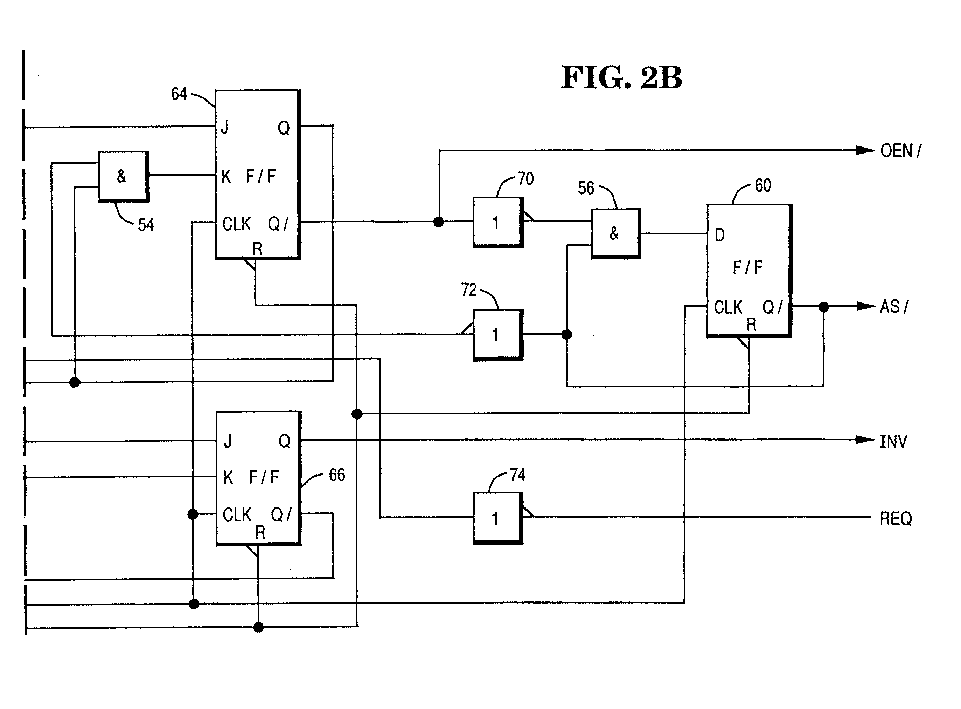

Figures 2A and 2B show a circuit diagram of state machine 28. State machine 28 includes NOR gates 44 and 46, AND gates 48, 50, 52, 54 and 56, D-type flip-flops 58 and 60, JK flip-flops 62, 64 and 66, and inverters 70, 72 and 74, connected as shown. As noted previously, two bits may be stored'at each location in tag register 32 (Figure 1B) corresponding to a data block in memory 22. The two bits are both set when a data block is written to cache 20, thereby providing redundancy to the system. As shown in Figure 2A, these two bits TD0 and TD1 are received by NOR gate 44, so if either one is a "1" the output of NOR gate 44 is "0".

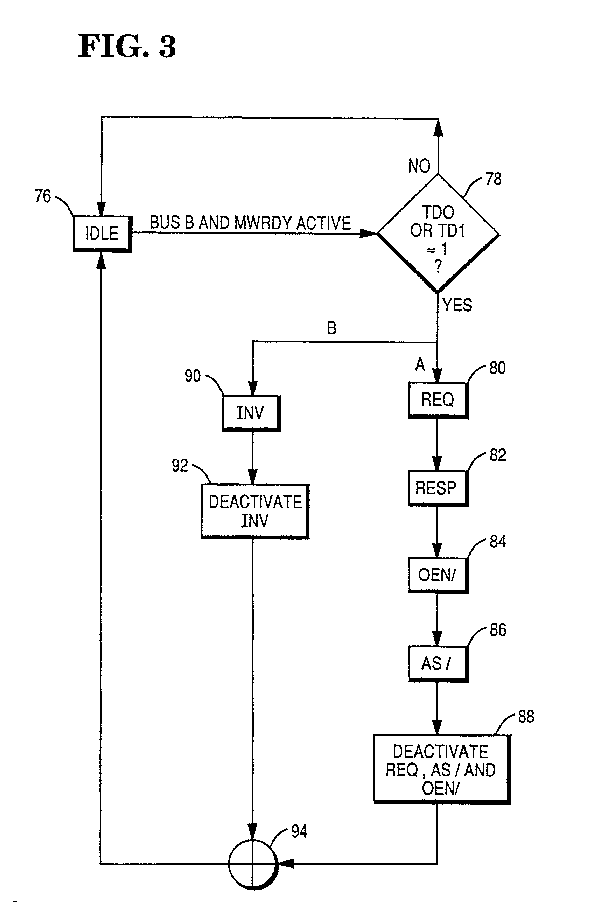

In operation, data blocks are written from memory 22 into cache 20 for fast access by processor 12. These transfers are recorded in memory 22 by setting the tag bits to "1" in tag register 32 at a location corresponding to the address of the subject data block in memory 22. Referring to the flow diagram of state machine 28 shown in Figure 3, writes to system memory 22 from bus 14 and any reads from memory 22 are ignored by state machine 28 as indicated by the idle state (block 76). An invalidation cycle requires bus 18 activity (BUSB signal) which results in a write to memory 22 (MWRDY signal).

The data transfer to memory 22 from bus 18 is compared to previous data transfers from memory 22 to cache 20. This is achieved by checking the tag bits at the corresponding location in register 32. Whenever memory 22 is accessed for a write, the same address is used to access tag register 32 and the contents, TD0 and TD1, of the corresponding addressed location are provided on line 38. The two tag data bits TD0 and TD1 are checked by state machine 20 (block 78). If either tag bit has been set, an overwrite has been detected. Only a single tag bit is actually needed; however, two bits provide a margin should one bit be bad. If both bits are zero (indicating that the corresponding data block in memory 22 has not been written to cache 20), state machine 28 returns to an idle state (block 76).

If at least one of the tag bits TD0 or TD1 is "1", an invalidation cycle is commenced. As shown in Figure 3, two parallel operations are undertaken. Path A shows the sequence of notifying cache 20 of the overwrite. Path B shows the sequence of resetting the tag bits in register 32.

Referring first to path A, the REQ signal is generated (block 80) to inform processor 12 that an entry in cache 20 is invalid. Processor 12 provides the RESP signal (block 82) when it is ready to receive the address of the invalidated data block. The address of the overwritten data block is placed on the address line ABUSA of bus 14 by enabling the output of address buffers 30 with the OEN/ signal (block 84). The address is then strobed into processor 12 by AS-/ (block 86). The REQ, OEN/ and AS/ signals are then deactivated (block 88).

Referring to Figures 2A and 2B, REQ is active when the BUSB and MWRDY signals are an active "1" and at least TD0 or TD1 is a "1". The output of AND gate 50 is "1" and, in the idle condition, flip-flop 66 provides a Q/ output of "1". The output of AND gate 52 is "1", the Q/ output of flip-flop 58 goes to "0" to sample NOR gate 44 which is a "0", and the output of NOR gate 46 goes to a "1". This sets the Q/ output of flip-flop 62 to "0" which inverter 74 converts to a "1" (REQ). REQ is then transmitted to processor 12 as an interrupt request signal. Processor 12 acknowledges the request when it is ready to respond to an invalidation cycle by providing a high RESP signal. This drives the output of AND gate 48 high which sets the Q/ output of flip-flop 64 to a "0" which is the output enable signal OEN/. Referring to Figure 1A, OEN/ is received by address buffers 30 which place the address of the overwritten data block on the address line ABUSA of bus 14. Referring again to Figures 2A and 2B, the output of AND gate 56 is "1" which activates the address strobe signal AS/ so that the address on ABDSA is strobed into processor 12. The Q/ output of flip-flop 60 feedsback to AND gate 56 which resets the AS/ signal on the next CLR signal. The Q/ output of flip-flop 60 is also provided through inverter 72 to AND gate 54 and along with the Q output feedback from flip-flop 64 resets flip-flop 64 and OEN/. The Q output of flip-flop 64 is also provided to the K input of flip-flop 62 to reset REQ at the same time AS/ is generated.

Memory cache 20 includes a location corresponding to each data block stored therein for indicating whether the corresponding data block is valid or invalid. When processor 12 receives the address of the invalid data block, a flag is set in the corresponding memory location. The invalidated data will not thereafter be used by processor 12. The flags are reset when new data is overwritten into cache 20.

Referring now to path B in Figure 3, the INV signal is generated (block 90) by flip-flop 66 to request memory controller 26 (Figures 1A and 1B) to clear the location in tag register 32 holding bits TD0 and TD1 for the invalidated data block. Memory controller 26 writes "0's" to the appropriate location in register 32 over line 36. The INV signal is then deactivated (block 92). When the operations on both paths A and B are complete, state machine 28 returns to its idle state 76. It will be noted from Figures 2A and 2B that the INV signal is deactivated when the BUSB and MWRDY signals are next active and a "1" is provided to the K input of flip-flop 66. This occurs when the tags have been cleared.

In summary, the present invention maintains coherency between data in main memory 22 and cache memory 20 by interrupting processor 12 only when a data block residing in cache 20 has been overwritten in memory 22.

It will be clear to those skilled in the art that the present invention is not limited to the specific embodiment disclosed and illustrated herein. For example, the invention may be extended to include a main memory connected to a number of busses, with processors and associated cache memories connected to selected ones of the busses. The tag register in the main memory can be provided with one or more bits for each of the data busses or cache memories. When a data block in the main memory is written into a cache on one of the busses, a tag bit or bits in the corresponding location in the tag register is/are set. Any overwrite of such data block from other than the bus with the cached data block will initiate an invalidation cycle.

Numerous modifications, variations, and full and partial equivalents can be undertaken without departing from the invention as limited only by the spirit and scope of the appended claims.

## Claims

1. A system of maintaining coherency for a data block transferred from a first memory (22) to a second memory (20), characterized in that said first memory is provided with register means (32) in which is made a record of the transfer of a data block from said first memory (22) to said second memory (20), detecting means (26,28) connected to said register means for detecting an overwrite of said data block in said first memory, and for notifying said second memory that said data block stored therein has been overwritten in said first memory.

2. A system according to claim 1, characterized in that said register means includes addressable locations, each location corresponding to the address of a data block in said first memory means (22) and being arranged to have stored therein data indicative of the transfer of a data block from said address to said second memory.

3. A system according to claim 1 or claim 2, characterized in that said detecting means includes a control circuit (26) for said memory (22), connected to said register means (32) by an address signal line (34) for receiving address signals in respect of data blocks to be transferred to said first memory (22), said control circuit is further connected by a data line (36) for the transmission of data, from said control circuit (26) to said register (32), which indicates that said data block has been transferred to said second memory.

4. A system according to claim 3, characterized in that said detecting means includes a logic circuit (28) connected to said register (32) by at least one data line (38), and connected to said second memory (20) by a first plurality of signal lines (42), and connected to said control circuit (26) by a second plurality of signal lines (40), for receiving signals indicating whether said data block is being overwritten.

5. A system according to claim 4, characterized in that said second memory (20) is operably connected to a processor (12), and said logic circuit (28) is connected to said processor by one of said first plurality of signal lines (42) for providing an interrupt signal when said data block is overwritten.

6. A system according to claim 5, characterized in that said processor (12) is connected to said logic circuit (28) by a second one of said plurality of signal lines (42) for providing a response signal in reply to said interrupt signal when said processor is ready to receive the address signals of the data block which has been overwritten.

7. A system according to claim 6, characterized in that said second memory (20) includes an additional storage location for each data block stored therein, said storage location being used to store information which indicates that the data block to which it relates has been overwritten.

8. A system according to any preceding claim, characterized in that said first memory (22) is connected to a first bus (14) and to a second bus (18), and said second memory (20) is connected solely to said first bus (14).

9. A system according to claim 6 and claim 8, characterized in that a buffer store (30) is connected to said control circuit (26) for receiving the address signals identifying said data block which has been overwritten, and is further connected to said logic circuit (28) for receiving an enabling signal which permits said buffer store (30) to place said address signals onto said first bus (14).

10. A system according to any preceding claim, characterized in that said first memory (22) is a main memory and said second memory (20) is a cache memory.

PROCESSOR 12

CACHE 20

FIG. 1A

14

16 42

AS /
REQ
RESP
CLK
RST /

30

OEN / → BUFFER

28

STATE MACHINE

26

BUS B
MWRDY
INV

MEMORY CONTROLLER

40

38

TD0
TD1

18

# FIG. 1B

# FIG. 2A

# FIG. 2B

EP 0 460 852 A2

# FIG. 3